# EUROPEAN PATENT APPLICATION

(11) **EP 1 933 559 A2**
(43) Date of publication of application: **18.06.2008**
(21) Application number: 07122313.5
(22) Date of filing: 04.12.2007
(51) Int. Cl.: H04N 7/088, H04N 5/445

(54) **Display apparatus and control method thereof**

(30) Priority: 13.12.2006 KR 20060126972
(71) Applicant: Samsung Electronics Co., Ltd., Suwon-si, Gyeonggi-do 442-743 (KR)
(72) Inventor: Kim, Seong-hyun, Seoul (KR)
(74) Representative: Grootscholten, Johannes A.M.

(57) **Abstract**

A display apparatus having a display unit, the display apparatus includes: a signal input unit which receives a broadcasting signal including teletext information; a user interface (UI) generator; and a controller which controls the UI generator to generate a UI menu for selecting a function to set a teletext information displaying method and display the UI menu on the display unit when the broadcasting signal including the teletext information is received through the signal input unit.

## Description

### BACKGROUND

### Field of the Invention

Apparatuses and methods consistent with the present invention relate to a display apparatus and a control method thereof, more particularly, to a display apparatus that can receive and display a broadcasting signal including teletext information, and a control method thereof.

### Description of the Related Art

A television (TV) or a display apparatus that can display teletext (hereinafter will be referred to as TTX) information receives a broadcasting signal that includes TTX information provided by a broadcasting station. Then, the TV or display apparatus processes image data included in the received broadcasting signal and displays the corresponding image, and at the same time extracts the TTX information from the received broadcasting signal and displays the extracted TTX information.

Herein, the TTX information refers to characters or diagrams included in a vertical blanking interval (VBI) of a received broadcasting signal. The TTX information includes news headlines, weather information, movie information, flight information, and stock information, and each can be displayed in a different page. Currently, the TTX information can include 100 pages to 899 pages of different information.

When a broadcasting signal including the TTX information is received, a user sets a mode of the display apparatus to a TTX mode for displaying the TTX information. Then, the TTX information can be displayed in a user-desired format by using functions included in the TTX mode.

For example, the user may use a font setting function to set a font for displaying the TTX information, an index function to index the TTX information, or a zooming function to look the TTX information more closely. In addition, such functions can be selected by using a remote controller or a function key provided in a casing of the display apparatus.

A conventional display apparatus must be provided with multiple function keys for selecting each function, but all the function keys cannot be provided in a remote controller or a casing member since the remote controller and the casing member have a spatial limit.

Further, since each manufacturer uses a different key allocation method when manufacturing a display apparatus, a user cannot easily find a key for selecting a desired-function.

The above information disclosed in this Background section is only for enhancement of understanding of the background of the invention and therefore it may contain information that does not form the prior art that is already known in this country to a person of ordinary skill in the art.

### SUMMARY

Accordingly, it is an aspect of the present invention to provide a display apparatus providing a user interface including functions for setting a teletext information displaying method when a broadcasting signal including the teletext information is received, and a control method thereof.

In addition, the present invention provides a display apparatus that can improve user convenience by enabling the user to easily search for the desired functions by providing functions to set displaying method of teletext information through a user interface, and a control method thereof.

The foregoing and/or other aspects of the present invention can be achieved by providing a display apparatus having a display unit, the display apparatus comprising: a signal input unit which receives a broadcasting signal including teletext information; a user interface (UI) generator; and a controller which controls the UI generator to generate a UI menu for selecting a function to set a teletext information displaying method and display the UI menu on the display unit when the broadcasting signal including the teletext information is received through the signal input unit.

According to an aspect of the invention, the display apparatus further comprises: a signal processor; and a user input unit through which the function included in the UI menu is selected, wherein the controller controls the signal processor to display the teletext information according to the function selected through the user input unit.

According to an aspect of the invention, the user input unit comprises a direction key having upper/lower/left/right buttons, and the controller controls the signal processor to display the teletext information according to the function selected by using the direction key.

According to an aspect of the invention, the controller determines whether a teletext mode is set for displaying the teletext information on the display unit if the broadcasting signal including the teletext information is received, and controls the UI generator to generate the UI menu if the teletext mode is set.

According to an aspect of the invention, the controller controls the UI generator to include the function supported by the teletext information in the UI menu.

The foregoing and/or other aspects of the present invention can be achieved by providing a method for controlling a display apparatus having a display unit, the method comprising: receiving a broadcasting signal including teletext information; and generating a user interface (UI) menu for selecting a function to set a teletext information displaying method and displaying the UI menu on the display unit.

According to an aspect of the invention, the method further comprises: selecting the function included in the UI menu; and displaying the teletext information according to the selected function.
According to an aspect of the invention, the selecting the function included in the UI menu comprises selecting the function by using a predetermined direction key.

According to an aspect of the invention, the generating and displaying the UI menu comprises: determining whether a teletext mode in which the teletext information is displayed on the display unit is set; and generating and displaying the UI if the teletext mode is set.

According to an aspect of the invention, the generating UI menu comprises including the function supported by the teletext information in the UI menu.

### BRIEF DESCRIPTION OF THE DRAWINGS

The above and/or other aspects and advantages of the prevent invention will become apparent and more readily appreciated from the following description of the exemplary embodiments, taken in conjunction with the accompanying drawings, in which:
FIG. 1 is a control block diagram of a display apparatus according to an exemplary embodiment of the present invention;
FIG. 2 shows a user interface (UI) menu according to the exemplary embodiment of the present invention;
FIG. 3 shows a user input unit according to the exemplary embodiment of the present invention; and
FIG. 4 is a flowchart of a control process of the display apparatus according to the exemplary embodiment of the present invention.

### DETAILED DESCRIPTION OF THE EMBODIMENTS

Reference will now be made in detail to the embodiments of the present invention, examples of which are illustrated in the accompanying drawings, wherein like reference numerals refer to like elements throughout. The exemplary embodiments are described below so as to explain the present invention by referring to the figures.

Hereinafter, a preferred exemplary embodiment of the present invention will be described in detail with reference to the accompanying drawings.

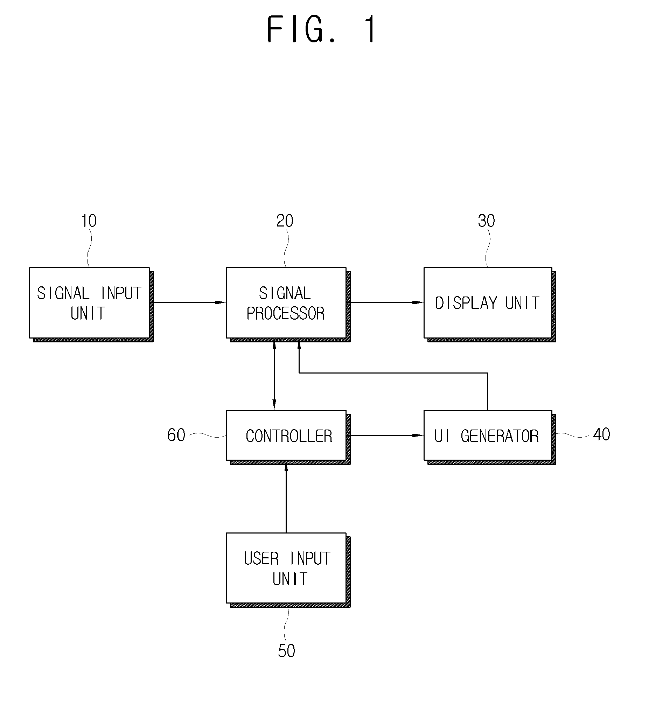

FIG. 1 is a control block diagram of a display apparatus according to an exemplary embodiment of the present invention. As shown in FIG. 1, the display apparatus includes a signal input unit 10, a signal processor 20, a display unit 30, a user interface (UI) generator 40, a user input unit 50, and a controller 60.

The display apparatus may be provided as a set-top box or a television. In the present exemplary embodiment, the display apparatus is provided as a television.

The signal input unit 10 is inputted a video signal including teletext (hereinafter will be referred to as TTX) information. The TTX information includes information related to daily life, such as news headline, weather information, movie information, flight information, and stock information.

In addition, the signal input unit 10 can be realized in various ways as long as it can receive signals including TTX information, such as analog signals (e.g. a composite video baseband signal (CVBS) or an S-video signal) and/or digital signals (e.g. digital video broadcasting (DVB) signal), or component signals. The signal input unit 10 according to the exemplary embodiment of the present invention may be provided as a tuner that can selectively receive a broadcasting signal channel.

The signal processor 20 processes the video signal input from the signal input unit 10 according to control of the controller 60 and displays the processed video signal on the display unit 30.

In addition, the signal processor 20 may have additional functions corresponding to a format of the input video signal. For example, the signal processor 20 may further include an analog-to-digital conversion function for converting a video signal of various formats into a digital format, a digital decoding function, a scaling function for adjusting vertical frequency, resolution, and a screen aspect ratio of a digital/analog video signal according to an output standard of a display module, and a predetermined format conversion function.

The display unit 30 displays a video signal processed by the signal processor 20, and may be provided as a digital light processing (DLP), a liquid crystal display (LCD), or a plasma display panel (PDP).

The UI generator 40 generates a UI menu to select a function for setting a TTX information displaying method by control of the controller 60, and may be realized as an on-screen-display (OSD) generator. In addition, the UI generator 40 may be included in the signal processor 20 that processes an input video signal.

The UI generator 40 can also generate a TTX window on which the TTX information processed by the signal processor 20 is displayed.

The user input unit 50 is provided to select one of functions included in the UI menu, and may include a key provided in a remote controller or a casing member, and a key signal generator for generating a key signal corresponding to an operation of the key.

In addition, the user input unit 50 may further include a TTX setting key for setting a TTX mode to display TTX information together with a video signal on the display unit 30, a number key for switching a broadcasting channel, and/or a direction key 53.

When a video signal including TTX information is input, the controller 60 controls the UI generator to generate a UI menu for setting a TTX information displaying method, and may be provided as a central processing unit (CPU) or a microcomputer (MICOM).

In further detail, when a video signal is input, the controller 60 determines whether the video signal includes TTX information. When the input signal includes the TTX information, the controller 60 controls the UI generator 40 to generate the UI menu to select a function for setting the TTX information displaying method.

In this case, the controller 60 determines whether the display apparatus is set to a TTX mode which enables the TTX information to be displayed on the display unit 30. The TTX mode can be set by using a TTX setting key provided in the user input unit 50, and the controller 60 can control the UI generator 40 to generate the UI menu when the mode of the display apparatus is set to the TTX mode.

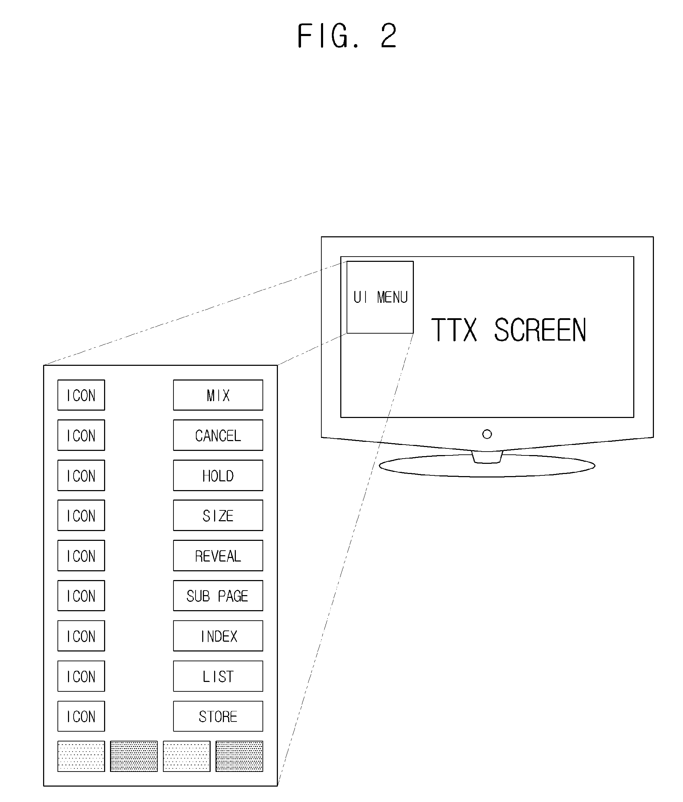

The UI menu generated by the UI generator 40 can be combined to a part of the video signal and displayed on a portion of the display unit 30, as shown in FIG. 2. The UI menu includes a MIX function for displaying TTX information over image information, a SIZE function for adjusting the size of a window on which the TTX information is displayed, a LIST function for displaying a TTX information list, and a STORE function for storing the TTX information.

When one of the functions is selected through the user input unit 50, the controller 60 sets a TTX information displaying method according to a selected function. In this case, the user may select a function in the UI menu by using the direction key 53 provided in the user input unit 50.

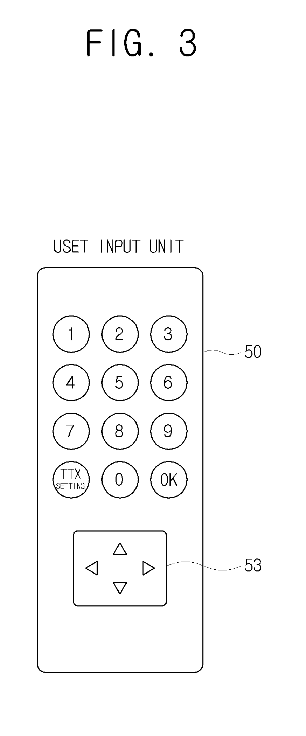

For example, assume that the user input unit 50 includes the number key, the direction key 53, and the TTX setting key as shown in FIG. 3. When the user sets the TTX mode by selecting the TTX setting key, the controller 60 determines whether TTX information is included in a broadcasting signal corresponding to a current channel viewed by the user.

When the TTX information is included, the controller 60 controls the UI generator 40 to generate and display a UI menu including a function for setting a TTX information display method. The user can select a function by using the upper/lower/left/right direction keys 53 provided in the user input unit 50. In addition, the controller 60 controls the signal processor 20 to display the TTX information according to the function selected through the user input unit 50.

The controller 60 may control the UI generator 40 to include functions which can be supported only by TTX information provided by each channel.

Therefore, when a broadcasting signal including TTX information is received, functions for setting TTX information displaying methods can be provided through a UI.

In addition, since the functions for setting the TTX information displaying methods can be selected through the UI menu rather than using keys respectively corresponding to the functions, manufacturing cost can be reduced and user convenience can be improved.

A location of the UI menu to be displayed on the display unit 30 can be changed by the user.

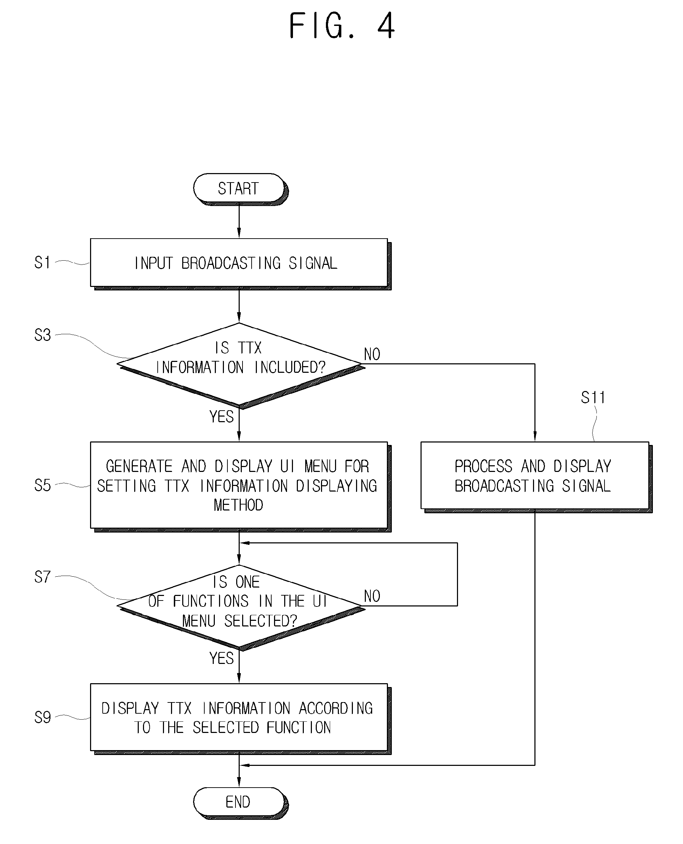

A control method of the display apparatus according to the exemplary embodiment of the present invention will be described with reference to FIG. 4.

As shown in FIG. 4, when a broadcasting signal is input at operation of S1, the controller 60 determines whether the input broadcasting signal includes TTX information, at operation of S3.

When the broadcasting signal does not include the TTX information, the input broadcasting signal is processed as in a conventional manner and then displayed at operation of S11.

When the broadcasting signal includes the TTX information, a UI menu is generated for selection of a function to set a TTX information displaying method and then displayed on the display unit 30, at operation of S5. As described above, the UI menu can be set to be displayed when the user sets the mode of the display apparatus to the TTX mode.

When the function included in the UI menu is selected by using the direction key 53 provided in the user input unit 50 at operation of S7, the controller 60 controls the TTX information to be displayed on the display unit 30 according to the selected function, at operation of S9.

As described, when a broadcasting signal including TTX information is received, a function for setting a TTX information displaying method can be provided through a UI according to the exemplary embodiment of the present invention.

In addition, since a plurality of functions for setting respective TTX information displaying methods can be selected through a UI menu rather than using plural keys, manufacturing cost can be reduced. In addition, a user can easily find a user-desired function, thereby improving user convenience.

As described above, a display apparatus and a control method of providing functions for setting teletext information displaying methods through a user interface when a broadcasting signal including teletext information is received, can be provided.

In addition, a display apparatus and a control method of improving user convenience by providing functions for setting teletext information displaying methods through a user interface, can be provided.

Moreover, a display apparatus and a control method of setting teletext information displaying methods without using plural function keys, thereby reducing manufacturing cost, can be provided.

Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

## Claims

1. A display apparatus having a display unit, the display apparatus comprising:
a signal input unit which receives a broadcasting signal including teletext information;
a user interface (UI) generator; and
a controller which controls the UI generator to generate a UI menu for selecting a function to set a teletext information displaying method and display the UI menu on the display unit when the broadcasting signal including the teletext information is received through the signal input unit.

2. The display apparatus of claim 1, further comprising:
a signal processor; and
a user input unit through which the function included in the UI menu is selected,
wherein the controller controls the signal processor to display the teletext information according to the function selected through the user input unit.

3. The display apparatus of claim 2, wherein the user input unit comprises a direction key having upper/lower/left/right buttons, and the controller controls the signal processor to display the teletext information according to the function selected by using the direction key.

4. The display apparatus of claim 1, wherein the controller determines whether a teletext mode is set for displaying the teletext information on the display unit if the broadcasting signal including the teletext information is received, and controls the UI generator to generate the UI menu if the teletext mode is set.

5. The display apparatus of claim 4, wherein the controller controls the UI generator to include the function supported by the teletext information in the UI menu.

6. A method for controlling a display apparatus having a display unit, the method comprising:
receiving a broadcasting signal including teletext information; and
generating a user interface (UI) menu for selecting a function to set a teletext information displaying method and displaying the UI menu on the display unit.

7. The method of claim 6, further comprising:
selecting the function included in the UI menu; and
displaying the teletext information according to the selected function.

8. The method of claim 7, wherein the selecting the function included in the UI menu comprises selecting the function by using a predetermined direction key.

9. The method of claim 6, wherein the generating and displaying the UI menu comprises:
determining whether a teletext mode in which the teletext information is displayed on the display unit is set; and
generating and displaying the UI if the teletext mode is set.

10. The display apparatus of claim 9, wherein the generating UI menu comprises including the function supported by the teletext information in the UI menu.
